# EUROPÄISCHE PATENTSCHRIFT

(11) **EP 2 171 395 B1**
(45) Veröffentlichungstag und Bekanntmachung des Hinweises auf die Patenterteilung: **12.07.2017**
(21) Anmeldenummer: 08784916.2
(22) Anmeldetag: 21.07.2008
(51) Int. Cl.: G01B 5/06, G01B 7/06

(54) **FOLIENDICKENSENSOR MIT PORÖSEM BLÄSER**
FILM THICKNESS SENSOR WITH A POROUS BLOWER
CAPTEUR D'ÉPAISSEUR DE FILM À SOUFFLEUR POREUX

(30) Priorität: 20.07.2007 DE 102007034415
(43) Veröffentlichungstag der Anmeldung: 07.04.2010
(73) Patentinhaber: Windmöller & Hölscher KG, 49525 Lengerich (DE)
(72) Erfinder: AVERMEYER, Ansgar, 49124 Georgsmarienhütte (DE)
(86) Internationale Anmeldenummer: PCT/EP2008/005950
(87) Internationale Veröffentlichungsnummer: WO 2009/012956

(56) Entgegenhaltungen:
- EP-A2- 0 157 237
- DE-B3-102005 051 675
- US-A- 3 513 555
- US-A- 3 528 002
- US-A1- 2002 130 431

## Beschreibung

Die Erfindung betrifft ein Sensorsystem zum Messen einer Folie, die sich relativ zum Sensorsystem bewegt nach Anspruch 1 und ein Verfahren zur Herstellung eines solchen Sensors nach Anspruch 7. Sensorsysteme zum Messen der Dicke flachen, relativ zum Sensorsystem bewegten Materials sind bekannt. Sie werden bevorzugt zur Messung der Dicke von gerade extrudierten Folien eingesetzt. Die Messwerte dienen der Regelung der Foliendicke. Flaches Material heißt daher im vorliegenden Zusammenhang in erster Linie folienförmiges oder bahnförmiges Material, das zumeist an dem Sensorsystem, das eine Sensorvorrichtung wie einen Sensorkopf umfasst, vorbeigeführt wird.

Zu den verwendeten Messverfahren gehören optische, radiometrische, induktive und kapazitive Messverfahren. Insbesondere bei der Herstellung empfindlicher oder klebriger Folie können jedoch durch Sensorsysteme, welche die Folie berühren, Schäden an derselben hervorgerufen werden. Daher schlägt die EP 591 239 B1 vor, eine Sensorvorrichtung mit einem Luftkissen von der Folie zu beabstanden.

Bei der solcherart beabstandeten Sensorvorrichtung handelt es sich bei der EP 591 239 B1 um einen kapazitiven Sensor, dessen beide Elektroden auf einer Seite der Folie auf einem Sensorkopf angebracht sind. Beide Elektroden weisen der Folie zugewandte Wirkflächen auf. Auch zwischen diesen Wirkflächen der beiden Elektroden prägt sich ein elektrisches Feld aus, dass das Luftpolster zwischen Sensorvorrichtung und Folie, die Folie selber und den hinter der Folie befindlichen Raum, der hier ebenfalls mit Luft gefüllt ist, durchgreift. Hierbei besteht bekanntlich eine Abhängigkeit der Kapazität des Kondensators von der materialspezifischen Dielektrizität εᵣ der von dem elektrischen Feld durchdrungenen Stoffe (Luft und Folienmaterial). Eine Änderung der Stärke des Folienmaterials ändert damit die Kapazität des Kondensators. Es hat sich jedoch gezeigt, dass auch Schwankungen des Abstandes zwischen der Folie und den Wirkflächen der Elektroden die Kapazität des Kondensators verändern. Dieser Einfluss des Abstandes der Folie - beziehungsweise eines beliebigen flachen Materials - besteht auch bei den vorgenannten anderen Messprinzipien wie bei dem induktiven Messprinzip.

Insbesondere bei Blasfolienanlagen ändert sich dieser Abstand jedoch ständig, da die Folie flattert - was auch zu Kontakten zwischen Sensorvorrichtung und Folie führen kann.

Die DE 195 11 939 A1 schlägt daher vor, den Abstand zwischen Sensorvorrichtung und Folie ständig zu messen, nach diesen Messwerten die Position der Sensorvorrichtung zu regeln und durch Bewegungen in der radialen Richtung der Folienblase ständig an die Flatterbewegung der Folie anzupassen. Allerdings ist es hier zusätzlich notwendig, die Folie mit Unterdruckdüsen in den Randbereichen der Sensorvorrichtung anzusaugen und so das Flattern der Folie relativ zur Sensorvorrichtung zu begrenzen.

Ein anderer Lösungsansatz für dasselbe Problem ist Gegenstand der EP 801 290 B1. Hier wird ebenfalls vorgeschlagen, den Abstand zwischen Sensor und Folie permanent zu regeln, wobei das Messsignal für die Regelung über eine Messung des Staudrucks zwischen Folie und Sensorvorrichtung gewonnen wird. Da die Bewegung der Sensorvorrichtung träger ist als die der flatternden Folie wird ergänzend vorgeschlagen, die Fehler, die bei der Dickenmessung durch einen schwankenden Abstand entstehen, folgendermaßen zu minimieren: Der tatsächliche Abstand zum Zeitpunkt der Dickenmessung wird gemessen. Der (fehlerhafte) Dickenmesswert wird anhand des Abstandsmesswertes mit Hilfe einer Fehlerfunktion korrigiert.

Eine weitere Möglichkeit besteht eben darin, nur dann zu messen, wenn der richtige Abstand eben gerade durchlaufen wird, was jedoch ungleiche Zeitintervalle zwischen den Messungen zur Folge hat. Aus der DE 10 2005 051 675 B3 ist ein Foliendickensensor mit porösem Bläser bekannt. Angesichts dieser Darstellung wird deutlich, dass die dargestellten Messvorrichtungen kompliziert teuer und trotzdem fehleranfällig sind.

Die Aufgabe der vorliegenden Erfindung besteht daher darin, diesen Nachteilen abzuhelfen.

Diese Aufgabe wird durch die kennzeichnenden Merkmale des Anspruchs 1 gelöst. Die vorliegende Erfindung macht sich hierbei zu nutze, dass sich Luftpolster bei Versuchen auf porösem oder mit Mikrolöchern versehenem Material als wesentlich stabiler erwiesen haben als auf anderen Materialien. Damit spielen die Abstandsschwankungen eine geringere Rolle. Der Sensor kann daher wesentlich dichter gegen die Folie angestellt werden. Eine weitere Minimierung des Folienflatterns ist erreichbar, wenn die der Folie oder allgemeiner dem beliebigen flachen Material zugewandte Seite der Sensorvorrichtung regelrecht gegen das flache Material gedrückt werden. In der Regel wird dann dieses Material eine Gegenkraft aufbringen, die dem erfindungsgemäßen stabilen Luftpolster entgegenwirkt. Als Ergebnis kann sich dann ein Gleichgewichtszustand herausbilden, der das Flattern begrenzt. Die angesprochene Gegenkraft wird oft - je nach Anwendungsfall - zumindest teilweise auch von anderen Gegenständen oder physikalischen Größen als dem flachen Material aufgebracht werden. Im Falle einer Blasfolienanlage spielt der Innendruck der Folienblase hier eine entscheidende Rolle.

In diesem Anwendungsfall ist es vorteilhaft, mit der der Folienblase zugewandten Fläche der Sensorvorrichtung über eine längere Zeitdauer - vielleicht während des gesamten Auftrags - in die Folienblase hinein zu drücken. Hierbei befindet sich das Luftpolster einer von außerhalb der Folienblase messenden Sensorvorrichtung in der radialen Richtung der Folienblase innerhalb des Sollradius derselben. Oft gilt das gleiche für die der Folie zugewandte Seite der Sensorvorrichtung und sogar Teile der Sensorvorrichtung selber.

Der Querschnitt der Folienblase kann sich hierbei an der Messstelle erheblich verformen. In der Regel fahren solche Sensoren in der Umfangsrichtung der Folienblase um dieselbe herum, um so das Dickenprofil der Blase entlang des Umfanges zu messen. Die Eindringtiefe des Luftpolsters in den Sollradius der Blase kann vorteilhafterweise 1 bis 5 Zentimeter betragen. Sie kann sogar 5 bis 15 Zentimeter betragen. Interessant bei dieser Ausprägung der Erfindung ist, dass die Eindringtiefe nicht als Folge eines Lageregelungsvorgangs der Sensorvorrichtung zustande kommt, bei der die Sensorvorrichtung der flatternden Folie zu folgen versucht und zeitweise eine solche Position einnimmt. Vielmehr beeinflusst der von dem Luftpolster ausgehende Druck seinerseits die Position und das Flatterverhalten der Folie.

In einer besonders günstigen Ausprägung der Erfindung kann daher auf den gesamten Aufwand der Positionsmessung der Folie, die ständigen schnellen Positionskorrekturen der Sensorvorrichtung und andere Maßnahmen, die in der EP 801 290 B1 und DE 195 11 939 A1 vorgeschlagen werden, um den Folgen des Folienflatterns vorzubeugen, verzichtet werden.

Gerade wenn die Sensorvorrichtung eine derart exponierte Position gegenüber dem flachen Material einnimmt und gegebenenfalls Druck auf dieses ausübt ist es jedoch von Vorteil zu erkennen, wann und ob sich schadhafte Stellen des flachen Materials der Sensorvorrichtung durch die gegenseitige Relativbewegung nähern, da es sonst passieren kann, dass die Sensorvorrichtung an einer solchen Stelle ein Loch erzeugt beziehungsweise ein solches vergrößert und in das Material hineingreift. Durch die Relativbewegung des Materials zur Sensorvorrichtung entsteht dann großer Schaden am flachen Material und/oder an der Sensorvorrichtung.

Daher ist es gegebenenfalls vorteilhaft, solche Schäden zu erkennen und die Sensorvorrichtung vom Material zurückzuziehen.

Die Anwendung der erfindungsgemäßen Lehre auf Sensorvorrichtungen, die induktive oder kapazitive Messmittel umfassen, erscheint besonders vorteilhaft, da bei diesen Messmethoden der Einfluss der Abstandsschwankungen auf die Messergebnisse besonders groß ist. Die Form der Elektroden, bei kapazitiven Messvorrichtungen, die beide Elektroden auf einer Seite des flachen Materials haben, ist in den drei oben zitierten Druckschriften gezeigt. In der Regel umgreifen sich die Elektroden gegenseitig und haben ihre Wirkflächen auf der dem flachen Material zugewandten Fläche der Sensorvorrichtung. Oft sind die Elektroden auf dieser Fläche der Sensorvorrichtung zwei konzentrische Kreise, zwei Ellipsen oder haben die Form mäandernder, ineinander verschränkter Strecken.

Erfindungsgemäße Sensorvorrichtungen, die an Blasfolienanlagen zum Einsatz kommen, können an Stellen dieser Anlagen eingesetzt werden, die bisher dem Einsatz dieser Sensoren nicht offen stehen. Bisher findet man solche Sensoren - in der Förderrichtung der Folie - zwischen dem Kalibrierkorb und der Flachlegung. An dieser Stelle ist das Flattern der Folie relativ gering, der Folienschlauch hat noch einen runden Querschnitt und ist bereits weitgehend kristallisiert.

Ein Nachteil der Messung an dieser Stelle besteht in der doch erheblichen Strecke zwischen dem Blaskopf oder einem Kühlring, an dem Foliendickenabweichungen entstehen und durch das Anblasen von Luft oder das Heizen der Schmelze gesteuert beziehungsweise auch geregelt werden können. Mit einem erfindungsgemäßen Meßsystem ist es möglich, beispielsweise zwischen dem Düsenspalt des Blaskopfes und dem Kalibrierkorb - falls ein solcher vorhanden ist - zu messen. Ein erfindungsgemäßes Messsystem kann daher auch in vorteilhafter Weise mit einer Vorrichtung in der Offenlegungsschrift DE 10 2005 038 731 A1 kombiniert werden. In dieser Druckschrift wird beschrieben, wie das Flatterverhalten der gerade extrudierten Folie direkt nach ihrer Extrusion eingeschränkt wird. Auch hierzu wird unter anderem die Verwendung porösen Materials vorgeschlagen. Auch das "Einklemmen" der Folie zwischen zwei Luftpolstern wird vorgeschlagen. Alle in dieser Druckschrift vorgeschlagenen Maßnahmen beziehungsweise Vorrichtungsmerkmale zur Führung der Folie beziehungsweise zur Begrenzung ihres Flatterverhaltens werden als Bestandteil der vorliegenden Druckschrift angesehen. Ein Rückgriff auf den Offenbarungsgehalt dieser Druckschrift im Rahmen des vorliegenden Patentbegehrens wird vorbehalten.

Ein weiterer Nachteil der Anordnung der Sensorvorrichtung in herkömmlicher Weise ist der hohe Vorrichtungsaufwand, der durch die separate Aufhängung (oft in mehreren Metern Höhe) und die Führung der Sensorvorrichtung entlang des Umfanges der Folienblase entsteht. Es erscheint möglich, die Sensorvorrichtung mit dem Kalibrierkorb zu kombinieren. Dies ist insbesondere bei erfindungsgemäßen Sensorvorrichtungen aufgrund der erwähnten Eigenschaften des charakteristischen Luftpolsters vorteilhaft.

Es können auch mehrere Sensoren entlang des Umfanges der Blase angebracht werden, was die Bewegung des Sensorsystems entlang des Umfanges erspart.

Auch an der Flachlegung können Sensorvorrichtungen angebracht werden. Werden sie nach einer tatsächlichen Flachlegung angebracht, so ist ein Sensor in der Regel nur noch in der Lage, die Dicke zweier eben gerade übereinander liegender Umfangsabschnitte des Folienschlauches gemeinsam zu messen. Durch spezifische Rechenverfahren oder eine optische Ermittlung der Lage der Grenzschicht zwischen beiden Lagen könnte jedoch auch diesem Problem begegnet werden.

Weitere Ausführungsbeispiele der Erfindung gehen aus der gegenständlichen Beschreibung und den Ansprüchen hervor.

Die einzelnen Figuren zeigen:
- Fig. 1: Eine Skizze einer ersten Blasfolienextrusionsanlage
- Fig. 2: Eine Skizze einer ersten Blasfolienextrusionsanlage
- Fig. 3: Ein Schnitt A-A aus Figur 1 mit zusätzlichen Merkmalen eines den Umfang einer Folienblase umlaufenden Sensorsystems
- Fig. 4: Eine Aufsicht auf die dem flachen Material zugewandte Seite einer kapazitiven Sensorvorrichtung
- Fig. 5: Eine Aufsicht auf die dem flachen Material zugewandte Seite einer kapazitiven Sensorvorrichtung, die ein Sensorgehäuse umfasst.
- Fig. 6: Aufsicht auf einen Sensor mit mäanderförmigen Elektroden
- Fig. 7: Sensor, der verschiebbar auf einem Kugelgelenk gelagert ist
- Fig. 8: Sensor, der vor der Stirnfläche ein bewegliches, poriges Material aufweist

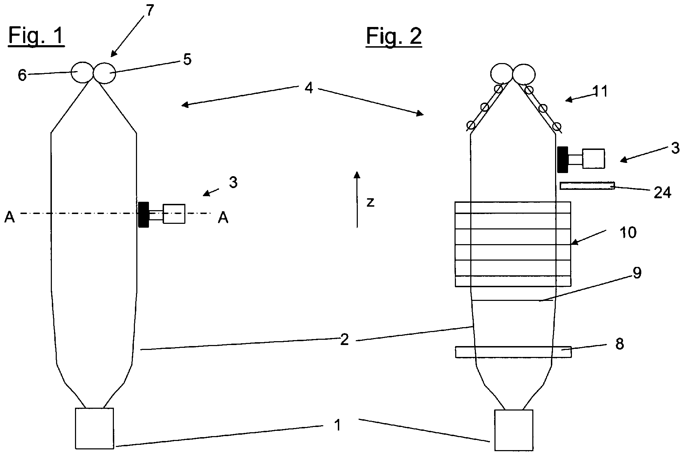

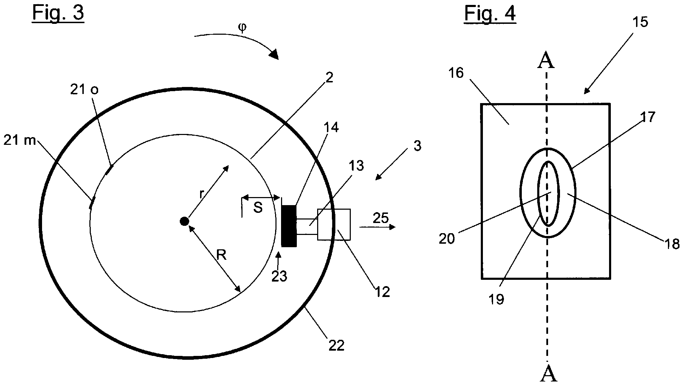

Fig. 1 zeigt eine erste Blasfolienextrusionsanlage 4, bei der eine Folienblase 2 beziehungsweise ein Folienschlauch von einem Blaskopf 1 in Richtung des Pfeils z extrudiert wird. Die Folienblase 2 wird von der Abquetschvorrichtung 7, die die Abquetschwalzen 5 und 6 umfasst, abgequetscht. Das Dickenmesssystem 3 nimmt einen typischen Platz ein. In der Regel wird ein solches Dickenmesssystem 2 eine Sensorvorrichtung beziehungsweise einen Sensorkopf 14 aufweisen, der in der in Figur 3 dargestellten Art um den Umfang der Folienblase 2 herumgeführt wird.

Figur 2 zeigt eine zweite Blasfolienextrusionsanlage 4, die zunächst die gleichen Merkmale wie die erste Blasfolienfolienextrusionsanlage aufweist. Bei der zweiten Blasfolienextrusionsanlage sind jedoch weitere teilweise notwendige, teilweise optionale Vorrichtungen gezeigt, um deren Lage in einer Extrusionsanlage darzustellen.

In der Förderrichtung z fällt zuerst der Außenkühlring 8, der Kühlluft gegen den Folienschlauch 2 bläst, auf. Bei moderneren Anlagen kann er die Temperatur der Kühlluft, die gegen Abschnitte 21 n des Umfangs des Folienschlauchs 2 geblasen wird, regeln, um Dickstellen auszugleichen (Figur 3). Auch eine Regelung der Schmelzetemperatur im Blaskopf ist zu diesem Zweck erprobt. Als nächstes gegenüber Figur 1 hinzugefügtes Vorrichtungsmerkmal sei der Kalibrierkorb 10 erwähnt, der zur Festlegung des Durchmessers des Folienschlauches 2 beiträgt.

In Figur 2 umfasst das Sensorsystem 3 auch noch eine zweite Sensorvorrichtung 24, deren Funktion später noch einmal erklärt wird.

Vor der Abquetschvorrichtung 7 ist noch die Flachlegung 11 zu erwähnen. Ebenfalls dargestellt ist eine typische Lage des Frostbereichs 9, in dem das zunächst als Folienschmelze vorliegende Material zumindest teilweise kristallisiert oder Kristallite ausbildet.

In Figur 3 ist eine Schnittdarstellung eines um den Umfang einer Folienblase umlaufenden Sensorsystems 3. Der Zweck der meisten dargestellten Komponenten ist die Anstellung und die Bewegung der ersten Sensorvorrichtung 14 an beziehungsweise in die Nähe der Folienblase 2. Zum unmittelbaren Halten der Vorrichtung 14 dient der Arm 13, der an dem Sensorbock 12 derart angelenkt ist, dass der in der radialen Richtung der Folienblase r verschieblich ist. Der Sensorbock 12 ist seinerseits mit den beiden vorgenanten Komponenten 13, 14 zusammen entlang der Schiene 22 verfahrbar. In der Regel wird der Sensorbock während einer Messperiode kontinuierlich in Umfangsrichtung [(ϕ) Richtung] um die Folienblase herumgefahren. Zum besseren Verständnis sind noch einmal die Umfangsabschnitte der Folienblase 21m und 21 o gezeigt. Sie symbolisieren, dass moderne Dickenregelverfahren oft den Folienblasenumfang in N individuell regelbare Umfangsabschnitte oder -sektoren 21 n zerlegen.

In Figur 3 ist nicht gezeigt, dass die der Folie zugewandte Seite 15 des Sensorkopfs 14 oder das Luftpolsters 23 von der aus Arm 13 und Sensorbock 12 gebildeten Haltevorrichtung so positioniert werden, dass sie innerhalb des Sollradius R der Folienblase 2 liegen. Die Strecke S einer solchen möglichen Verschiebung beziehungsweise deren (übertriebener) Betrag ist durch den mit S bezeichneten Pfeil S dargestellt. Die Vorteile einer solchen Verschiebung bei der Verwendung eines erfindungsgemäßen Sensorsystems 3 an einer Blasfolienanlage 4 wurden bereits diskutiert. Zu einer vorteilhaften Ausführungsform eines erfindungsgemäßen Sensorsystems kann auch eine zweite Sensorvorrichtung 24 gehören, die wie in Figur 2 gezeigt in der Transportrichtung der Folie z vor der ersten Sensorvorrichtung 14 die Folie auf Schäden und Löcher untersucht. Entdeckt sie ein solches Loch, wird die erste Sensorvorrichtung 14 durch eine Bewegung des Arms 13 von der Folie weggezogen. Die Aktoren für diese Bewegung, die durch den Pfeil 25 angedeutet ist, können im Arm 13 oder auf dem Sensorbock 12 angebracht sein. Durch die Bewegung werden Schäden an Folie 2 und erster Sensorvorrichtung 14 vermieden. Zu diesem Zweck eignen sich optische beziehungsweise auf elektromagnetische Strahlung reagierende Sensoren, die oft auch einen Gegenpart innerhalb der Folienblase benötigen.

Figur 4 zeigt eine Skizze der der Folie zugewandten Seite einer Sensorvorrichtung 14 eines kapazitiven Sensors. Die Seite 15 lässt sich unterteilen in den Bereich außerhalb der Elektroden 16, die äußere und die innere Elektrode 17 und 19, ein Dielektrikum 18 zwischen diesen Elektroden 17 und 19 sowie oft aber keineswegs immer einen Innenbereich 20.

Poröses oder mit Mikrolöchern versehenes Material kann sich in jedem dieser Bereiche befinden. Es kann auch in jedem dieser Bereiche derartiges Material sein, durch das Luft gepresst wird, um ein Luftpolster zu erzeugen. Derartiges Material ist jedoch auch dann gut für die Stabilität des Luftpolsters, wenn gar keine Luft unmittelbar an dieser Stelle durch das Material - sondern nur an benachbarten Stellen gepresst wird.

Zumindest eine Elektrode, oder zumindest deren Wirkfläche könnte auch aus einem solchen Material bestehen. Um das elektrische Feld möglichst günstig zu positionieren, könnte hierzu ein Metall, vorzugsweise Sintermetall gewählt werden.

Generell ist es insbesondere im Zusammenhang mit einem Hereindrücken des Sensors in die Folienblase von Vorteil, wenn das Sintermaterial feinkörnig ist beziehungsweise wenn das Material feine Löcher aufweist. In diesem Zusammenhang wird eine Korn- beziehungsweise Lochgröße kleiner 100 µm als fein eingestuft. Noch vorteilhafter sind Korn- oder Lochgrößen kleiner 80 µm oder gar kleiner 50 µm. Bei solchen Korn- oder Lochgrößen ist es möglich, Luft mit relativ hohem Druck zum Aufbau des Luftpolsters zu verwenden, was zu einem stabilen Luftposter führt. Ein relativ hoher Druck ist schon bei 50 oder 100 Milliliter bis ein Bar Überdruck gegeben.

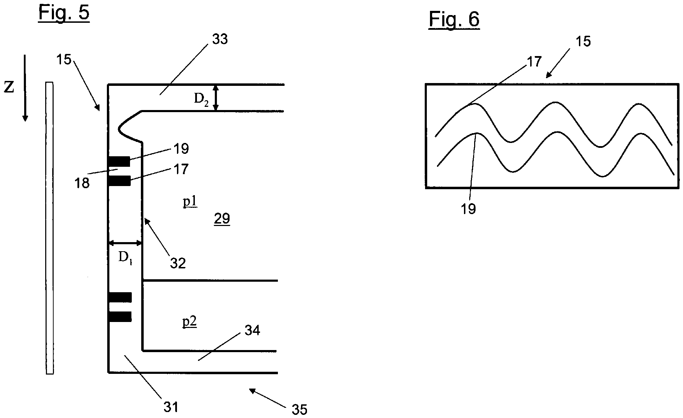

Die Figur 5 zeigt den Schnitt A-A aus Figur 4. Das poröse Material 30 umgibt den Druckraum 29 und bildet insgesamt den porösen Körper 35. In den Druckraum 29 wird mit nicht gezeigten Vorrichtungen Druckluft gefördert. Diese durchdringt das poröse Material 30, das den Druckraum 29 umgibt. Im gezeigten Ausführungsbeispiel ist nicht nur die der Folie 2 unmittelbar zugewandte Seite 15 der Sensoreinrichtung beziehungsweise des porösen Körpers 35 (hier gleichbedeutend), sondern auch die Seitenflächen 33 und 34 aus dem porösen Material gefertigt. Diese Maßnahme ist besonders vorteilhaft, wenn der gesamte poröse Körper mit großer Kraft gegen die Folienblase angestellt und so in diese 2 hineingedrückt wird. In diesem Fall wird die Folie auch durch das Luftpolster das die Seitenwände 33, 34 umgibt geschützt.

In dem Schnitt sind auch die äußere und innere Elektrode 17 und 19 sowie das Dielektrikum 18 zwischen den Elektroden zu sehen. Es ist möglich, das poröse Material als mit einem Hohlraum versehenen Sintermaterialblock vorzusehen, in den die Elektroden in der gezeigten Art eingelassen sind. Es hat sich als vorteilhaft herausgestellt, die der Folie 2 zugewandte Seite 32 des Druckraumes mit Ausnehmungen 28 zu versehen. Die tiefsten oder größten Ausnehmungen sollten in der Förderrichtung der Folie zu Beginn des Druckraumes 29 vorgesehen sein. Der Luftbedarf zum Transport der Folie beziehungsweise zur Aufrechterhaltung des Luftpolsters ist zumeist an der Stelle am größten, an der die Folie 2 in den Wirkbereich des Luftpolsters eintritt. Selbiges kann mit einer Variation der Dicke D₁ und/oder D₂ der Außenwand 31 des Sensorgehäuses 28 realisiert werden. Dabei ist es von Vorteil, wenn sich die Dicke der Außenwand entgegen der z-Richtung verjüngt.

In einer besonders bevorzugten Ausführungsform des Sensors 3 besteht der Druckraum 29 aus zumindest zwei unterschiedlichen Druckkammern p1,p2, die unabhängig voneinander mit unterschiedlichen Drücken beaufschlagt werden können. Damit kann ein sich änderndes Luftpolster 23, entlang der der Folie 2 zugewandten Seite 15, realisiert werden.

Allgemein dürfte es vorteilhaft sein, einen porösen Körper 35 mit einem für Sintermetall üblichen Herstellverfahren in einer geeigneten Form herzustellen. Falls es Bedarf gibt, besondere Konturen des Sintermetalls wie die Ausnehmungen 28 nachträglich einzuarbeiten, ist die Anwendung von Fräsmaschinen, oder Laser- beziehungsweise Wasserstrahlbearbeitungsmethoden von Vorteil.

Eine weitere vorteilhafte Ausführungsform ist ein mäanderförmiger Aufbau der Elektroden 17,19 des Sensors, wie er in Figur 6 zu sehen ist. Damit kann eine breite Stirn- bzw. Messfläche 15 erzeugt werden, die die Folie während der Dickemessung durchläuft. Die aktive Messlänge des Sensors wird, durch das bessere Nutzverhältnis der Elektrode zur mechanischen Sensorgröße, vergrößert. So können Dickeschwankungen der Folie in einem größeren Messbereich erfasst werden.

Durch Integration einer elektrischen und/oder mechanischen Funktionsüberprüfung im Sensor 3 zur Anzeige eines Alarms zum Leitsystem, kann die Produktion besser überwacht und Ausschuss vermieden werden.

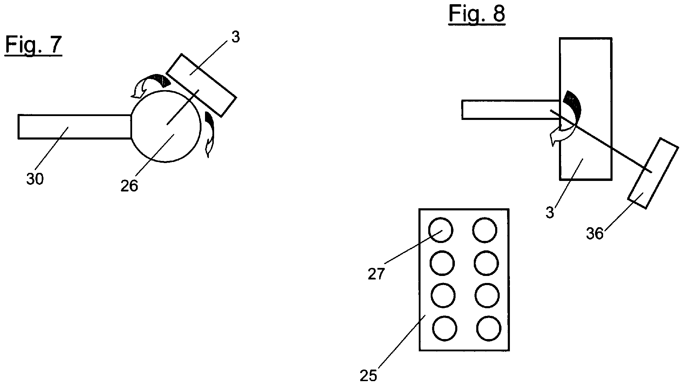

Figur 7 zeigt eine bevorzugte Ausführungsform eines Sensors 3, der kugelgelagert 26 drehbar auf einer starren Halterung 30 aufgebracht ist. Dadurch kann der Abstand zwischen Sensor 3 und Folie 2 genau eingestellt und Signalschwankungen kompensiert werden.

Eine weitere Ausführungsform kann einen elektrischen und/oder mechanischen Drucksensor oder Druckschalter beinhalten. Dieser kann in dem Druckraum des Sensorgehäuses 29 angebracht sein.
- Dadurch kann eine bessere Kontrolle des Luftpolsters 23 an der Stirnfläche 15 des Sensors 3 gewährleistet werden. Durch die damit erwirkte bessere Funktionssicherheit können Berührungen des Sensors 3 mit der Folie 2 bei Druckschwankungen der Druckluftzufuhr vermieden werden.
- Bei obiger sensorischer Überwachung kann bei einer bevorzugten Ausführungsform eine Vorrichtung zur Reinhaltung der porösen Sensor-Stirnfläche 15 angebracht sein. Die Reinigung der porösen Oberfläche 15 kann durch kurzzeitigen Überdruck mittels Druckluftleitung realisiert werden. Hierbei werden die Poren 27 von Verunreinigungen befreit. Damit lässt sich die Laufzeit der Maschine erhöhen und Beschädigungen des Sensors 3 und/oder der Folie 2 vermeiden.

In einer bevorzugten Ausführungsform in Figur 8 kann vor dem Sensor 3 eine senkrecht zur Folienrichtung bewegbare Materialplatte 36, welche mittels Öffnungen 27 luftdurchlässig oder porös ist, bevorzugt aus Sintermetall, angebracht sein, die mit Luft durchströmt ein Luftpolster 23 zwischen sich und der Folie 2 bildet, auf dem die zu vermessene Folie 2 aufliegen kann und damit den Abstand zwischen Sensor und Folie steuert.

Alle oben genannten Ausführungsformen können in beliebiger Weise miteinander kombiniert werden.

| **Bezugszeichenliste** | |
|---|---|
| 1 | Blaskopf |
| 2 | Folienblase/-schlauch |
| 3 | Sensorsystem |
| 4 | Blasfolienanlage |
| 5 | Abquetschwalze |
| 6 | Abquetschwalze |
| 7 | Abquetschvorrichtung |
| 8 | Außenkühlring |
| 9 | Frostbereich |
| 10 | Kalibrierkorb |
| 11 | Abquetschvorrichtung |
| 12 | Sensorbock |
| 13 | Arm |
| 14 | (erste) Sensorvorrichtung, Sensorkopf |
| 15 | der Folie zugewandte Seite der Sensorvorrichtung |
| 16 | Bereich außerhalb der Elektroden |
| 17 | äußere Elektrode (Wirkfläche) |
| 18 | Dielelektrikum zwischen den Elektroden |
| 19 | innere Elektrode (Wirkfläche) |
| 20 | Innenbereich |
| 21 n | Umfangsabschnitt |
| 22 | Schiene |
| 23 | Luftpolster |
| 24 | zweite Sensorvorrichtung |
| 25 | Pfeil in Bewegungsrichtung des Sensors 14 von der Folie 2 weg |
| ϕ | Umfangsrichtung der Folienblase |
| r | radiale Richtung der Folienblase |
| z | Förder- bzw. axiale Richtung der Folienblase |
| R | Sollradius der Folienblase |
| S | Strecke, um den das Luftpolster in den Sollradius der Blase eingreift |
| p1 | Druckkammer |
| p2 | Druckkammer |
| 26 | Kugellagerung |
| 27 | Luftdurchlässige Poren |
| 28 | Ausnehmung, Vertiefungen im porösen Material |
| 29 | Sensorgehäuse, Druckraum |
| 30 | Starre Halterung |
| 31 | Außenwand |
| 32 | Der Folie zugewandte Innenwand |
| 33 | Seitenwand des Druckraumes |
| 34 | Seitenwand des Druckraumes |
| 35 | Poröser Körper |
| 36 | Bewegte und poröse Materialplatte |

## Patentansprüche

1. Sensorsystem (3) zum Messen der Dicke einer, relativ zum Sensorsystem (3) bewegten Folie (2), welches folgende Merkmale aufweist:
- eine erste Sensorvorrichtung (14) zur Messung der Dicke einer Folie (2),
- Mittel zum Erzeugen eines Luftpolsters (23), welche derart angeordnet sind, dass zwischen der zumindest einen der Folie (2) zugewandten Seite (16) der Sensorvorrichtung (15) und der Folie (2) im Betrieb ein Luftpolster (23) entsteht,
- wobei die erste Sensorvorrichtung (14) im Bereich des Luftpolsters (23) Flächenabschnitte aus porösem und/oder mit Mikrolöchern versehenem Material aufweist,
**dadurch gekennzeichnet, dass** zumindest zwei Flächenabschnitte mit unterschiedlichen Luftdurchtrittsraten pro Flächeneinheit vorgesehen sind.

2. Sensorsystem (3) nach dem vorstehenden Anspruch,
**gekennzeichnet durch**
eine gleichgerichtete Luftaustrittrichtung aus dem porösen Körper (28), bei zumindest zweier der Flächenabschnitte mit unterschiedlicher Ausströmrate pro Flächeneinheit.

3. Sensorsystems nach den zwei vorstehenden Ansprüchen,
**dadurch gekennzeichnet, dass**
die Dicke D der Gehäusewand (30) in den Flächenabschnitten variiert.

4. Sensorsystem nach einem der vorstehenden Ansprüche,
**dadurch gekennzeichnet, dass**
zumindest eine Vertiefung im Sintermaterial (28), innerhalb des Sensorgehäuses (29) zur Änderung der Luftdurchlässigkeit entlang der Flächenabschnitte vorliegt.

5. Sensorsystem nach einem der vier vorstehenden Ansprüche,
**dadurch gekennzeichnet, dass**
die Dicke D₁ und/oder D₂ des porösen Materials (35) in Transportrichtung z der Folie (2) in dem Flächenbereich am geringsten ist, an dem die Folie (2) in den Wirkbereich des Luftpolsters (23) eintritt.

6. Sensorsystem nach einem der fünf vorstehenden Ansprüche,
**dadurch gekennzeichnet, dass**
zumindest zwei Flächenabschnitte mit unterschiedlichen Luftdurchtrittsraten mit unterschiedlichen Druckluftreservoirs, welche die Flächenabschnitte mit Druckluft zur Aufrechterhaltung des Luftposters (23) beaufschlagen, verbunden sind.

7. Verfahren zur Herstellung eines Sensorsystems nach Aspruch 1,
**dadurch gekennzeichnet, dass** eine Elektrodenform des Sensors aus einem porösen, vorgefertigten Grundmaterialkörper, per Fräsmaschinen, oder Laser- beziehungsweise Wasserstrahlbearbeitungsmethoden, ausgenommen wird.

8. Sensorsystem (3) nach einem der Ansprüche 1-6,
**dadurch gekennzeichnet, dass**
ein mäanderförmiger Aufbau der Elektroden (17, 19) innerhalb des Sensors realisiert ist.

9. Sensorsystem (3) nach einem der Ansprüche 1-6 oder 8,
**dadurch gekennzeichnet, dass**
die Integration einer elektrischen und/oder mechanischen Funktionsüberprüfung im Sensor (3) zur Anzeige eines Alarms zum Leitsystem realisiert ist.

10. Sensorsystem (3) nach einem der Ansprüche 1-6, 8 oder 9,
**dadurch gekennzeichnet, dass**
der Sensor (3) mit einem Kugellager (26) drehbar auf einer starren Halterung (30) aufgebracht ist.

11. Sensorsystem (3) nach einem der Ansprüche 1-6 oder 8-10,
**dadurch gekennzeichnet, dass**
vor dem Sensor (3) eine bewegte, mit Luft durchströmte, poröse Materialplatte (36) angebracht ist, die zwischen sich und der Folie (2) ein Luftpolsters (23) erzeugt.

12. Sensorsystem (3) nach einem der Ansprüche 1-6 oder 8-11,
**dadurch gekennzeichnet, dass**
eine Vorrichtung zur Reinhaltung der porösen Sensor-Stirnfläche (15) angebracht ist.

13. Sensorsystem (3) nach einem der Ansprüche 1-6 oder 8-12,
**dadurch gekennzeichnet, dass**
der poröse Körper (35) zumindest zwei unterschiedlichen Druckkammern (p1, p2), welche mit unterschiedlichem Luftdruck beaufschlagt werden können, aufweist.

## Claims

1. Sensor system (3) for measuring the thickness of a film (2) moved relative to the sensor system (3), and comprising:
- a first sensor device (14) for measuring the thickness of a film (2),
- means for producing an air cushion (23), which are so arranged that an air cushion (23) is produced during operation between at least one of the sides (16) of the sensor device (15) facing the film (2) and the film (2) itself,
- wherein the first sensor device (14) comprises surface sections of porous material and/or material provided with microholes in the region of the air cushion (23),
**characterized in that**
at least two of the surface sections have a different air discharge rate per unit area

2. Sensor system (3) according to the preceding claim,
**characterized in that**
through a directed air outlet orientation out of the porous body (28), wherein at least two surface sections are provided with different air throughput rates per unit area.

3. Sensor system (3) according to the two preceding claims,
**characterized in that**
the thickness D of the housing wall (30) varies in the surface sections.

4. Sensor system (3) according to one of the preceding claims,
**characterized in that**
at least one depression in the sintered material (28) is provided within the sensor housing (29) to change the air permeability along the surface sections.

5. Sensor system (3) according to one of the four preceding claims,
**characterized in that**
the thickness D and/or D₂ of the porous material (35) is lowest in the direction of transport z of the film (2) in the surface region at which the film (2) enters in the effective range of the air cushion (23).

6. Sensor system (3) according to one of the five preceding claims,
**characterized in that**
at least two surface sections with different air flow rates are connected to different compressed air reservoirs, which pressurize the surface sections with compressed air to maintain the air cushions (23).

7. Method for producing a sensor system according to claim 1,
**characterized in that**
an electrode shape of the sensor is produced from a porous prefabricated base material body, by means of milling machines, or laser or water jet processing methods.

8. Sensor system (3) according to one of the claims 1-6,
**characterized in that**
a meander-shaped structure of the electrodes (17, 19) is implemented within the sensor.

9. Sensor system (3) according to one of the claims 1-6 or 8,
**characterized in that**
the integration of an electrical and/or mechanical functional check in the sensor (3) for the display of an alarm, is implemented for the control system.

10. Sensor system (3) according to one of the claims 1-6, 8 or 9,
**characterized in that**
the sensor (3) is rotatably mounted on a rigid support (30) with a ball bearing (26).

11. Sensor system (3) according to one of the claims 1-6 or 8 to 10,
**characterized in that**
an air-permeated porous material plate (36) is moved in front of the sensor (3) to produce an air cushion (23) between it and the film (2).

12. Sensor system (3) according to one of the claims 1-6 or 8 to 11,
**characterized in that**
a device is mounted to keep the porous sensor face (15) clean.

13. Sensor system (3) according to one of the claims 1-6 or 8 to 12,
**characterized in that**
the porous body (35) has at least two different pressure chambers (p1, p2), which may be subjected to different air pressures.

## Revendications

1. Système de capteur (3) pour la mesure de l'épaisseur d'un film (2) déplacé par rapport au système de capteur (3), qui présente les caractéristiques suivantes :
- un premier dispositif de capteur (14) pour la mesure de l'épaisseur d'un film (2),
- des moyens pour la production d'un coussin d'air (23), qui sont disposés de façon à ce que, entre l'au moins un côté (16) du dispositif de capteur (15) orienté vers le film (2) et le film (2), un coussin d'air (23) soit généré au cours du fonctionnement,
- le premier dispositif de capteur (14) comprend, au niveau du coussin d'air (23), des portions de surface constituées d'un matériau poreux et/ou muni de micro-trous,
**caractérisé en ce que**
au moins deux portions de surface présentent des taux de passage d'air par unité de surface différents.

2. Système de capteur (3) selon la revendication précédente,
**caractérisé par**
une direction de passage d'air alignée à partir du corps poreux (28), au niveau d'au moins deux des portions de surface avec des taux d'écoulement par unité de surface différents.

3. Système de capteur selon les deux revendications précédentes,
**caractérisé en ce que**
l'épaisseur D de la paroi du boîtier (30) varie sur les portions de surface.

4. Système de capteur selon l'une des revendications précédentes,
**caractérisé en ce que**
au moins une cavité existe dans le matériau fritté (28) à l'intérieur du boîtier du capteur (29) pour la modification de la perméabilité à l'air le long des portions de surface.

5. Système de capteur selon l'une des quatre revendications précédentes,
**caractérisé en ce que**
l'épaisseur D1 et/ou D2 du matériau poreux (35) est la plus faible dans la direction de transport z du film (2) dans la zone de surface dans laquelle le film (2) entre dans la zone d'action du coussin d'air (23).

6. Système de capteur selon l'une des cinq revendications précédentes,
**caractérisé en ce que**
au moins deux portions de surface avec des taux de passage d'air différents sont reliées avec différents réservoirs d'air comprimé qui alimentant les portions de surface en air comprimé afin de maintenir le coussin d'air (23).

7. Procédé de fabrication d'un système de capteur selon la revendication 1,
**caractérisé en ce que**
une forme d'électrode du capteur est réalisée à partir d'un corps en matériau de base poreux préfabriqué, par fraisage ou par des procédés d'usinage à laser ou à jet d'eau.

8. Système de capteur selon l'une des revendications 1 à 6,
**caractérisé en ce que**
une structure en zigzag des électrodes (17, 19) est réalisée à l'intérieur du capteur.

9. Système de capteur (3) selon l'une des revendications 1 à 6 ou 8,
**caractérisé en ce que**
l'intégration d'un contrôle de fonctionnement électrique et/ou mécanique dans le capteur (3) est réalisée pour l'affichage d'une alarme au niveau du système de commande.

10. Système de capteur (3) selon l'une des revendications 1 à 6, 8 ou 9,
**caractérisé en ce que**
le capteur (3) est monté avec un roulement à billes (26) de manière rotative sur un support rigide (30).

11. Système de capteur (3) selon l'une des revendications 1 à 6 ou 8 à 10,
**caractérisé en ce que**
devant le capteur (3), est montée une plaque en matériau poreux (36) mobile traversée par de l'air, qui génère un coussin d'air (23) entre celui-ci et le film (2).

12. Système de capteur (3) selon l'une des revendications 1 à 6 ou 8 à 11,
**caractérisé en ce que**
un dispositif est prévu pour maintenir propre la surface frontale du capteur (15).

13. Système de capteur (3) selon l'une des revendications 1 à 6 ou 8 à 12,
**caractérisé en ce que**
le corps poreux (35) comprend au moins deux chambres de pression (p1, p2) différentes, qui peuvent être alimentées avec différents airs comprimés.
